# EUROPÄISCHE PATENTSCHRIFT

(11) **EP 0 451 475 B1**
(45) Veröffentlichungstag und Bekanntmachung des Hinweises auf die Patenterteilung: **25.08.1993**
(21) Anmeldenummer: 91102771.2
(22) Anmeldetag: 26.02.1991
(51) Int. Cl.: G01D 5/38

(54) **Integriert-optische Sensoreinrichtung**
Integrated optical sensor arrangement
Système de capteur optique intégré

(30) Priorität: 11.04.1990 DE 4011718
(43) Veröffentlichungstag der Anmeldung: 16.10.1991
(73) Patentinhaber: Dr. Johannes Heidenhain GmbH, D-83292 Traunreut (DE)
(72) Erfinder: Michel, Dieter, Dipl.-Ing., W-8220 Traunstein (DE); Franz, Andreas, Dr., W-8221 Kienberg (DE)

(56) Entgegenhaltungen:
- EP-A- 0 276 305
- EP-A- 0 279 944
- EP-A- 0 284 908
- EP-A- 0 365 806
- DE-C- 3 625 327

## Beschreibung

Die Erfindung betrifft eine integriert-optische Sensoreinrichtung - vorzugsweise eine lichtelektrische Positionsmeßeinrichtung - gemäß dem Oberbegriff des Anspruchs 1.

Eine Positionsmeßeinrichtung wird insbesondere bei Bearbeitungsmaschinen zur Messung der Relativlage eines Werkzeugs bezüglich eines zu bearbeitenden Werkstücks eingesetzt.

Aus der DE-C-36 25 327 ist eine lichtelektrische Positionsmeßeinrichtung zur Messung der Relativlage zweier zueinander beweglicher Objekte bekannt, bei der ein mit dem einen Objekt verbundener Teilungsträger mit einem Beugungsgitter von einer mit dem anderen Objekt verbundenen Abtasteinheit abgetastet wird, die einen Halbleiterlaser sowie eine integriert-optische Anordnung aufweist. In dieser integriert-optischen Anordnung sind zwei Einkoppelelemente in den beiden Eingangswellenleitern eines Wellenleiterkopplers und drei Detektoren in den drei Ausgangswellenleitern dieses Wellenleiterkopplers auf einem Substrat zusammengefaßt. Das vom Halbleiterlaser ausgehende Lichtstrahlenbündel wird vom Beugungsgitters des Teilungsträgers in zwei Beugungsstrahlenbündel einer Ordnung aufgespalten, die mittels der beiden Einkoppelelemente in Form zweier hornförmiger Beugungsgitter in die beiden Eingangswellenleiter eingekoppelt werden, im Wellenleiterkoppler miteinander interferieren und sodann in den drei Ausgangswellenleitern auf die drei Detektoren fallen, deren periodische Abtastsignale einen bestimmten gegenseitigen Phasenversatz aufweisen und aus denen in bekannter Weise Meßwerte für die Relativlage der beiden Objekte gewonnen werden.

Bei derartigen integriert-optischen Anordnungen, zu deren Funktion beugungsoptisch wirkende Einkoppel/Auskoppelelemente erforderlich sind, ist eine einwandfreie Funktion nur gegeben, wenn die Emissionswellenlänge des Lasers, die Gitterparameter der Koppelelemente und die Brechungsindizes der Wellenleiter bzw. der umgebenden Medien aufeinander abgestimmt sind. Zur Sicherstellung einer einwandfreien Funktionsweise muß eine optimale Emissionswellenlänge des Lasers eingestellt und innerhalb einer Toleranz von 10⁻³ stabil gehalten werden; diese optimale Einstellung geht jedoch bei Änderungen der Umgebungsbedingungen, insbesondere bei Temperaturänderungen, verloren, so daß Meßfehler die Folge sein können.

Aus der EP-A-0 284 908 ist noch eine Anordnung zur Steuerung oder Regelung der Emissionswellenlänge und der emittierten optischen Leistung eines Halbleiterlasers bekannt; diese Steuerung oder Regelung wird dabei simultan durchgeführt. Die vom Laser emittierte optische Leistung wird teilweise einer ersten Detektoreinrichtung und sodann über wenigstens ein Bragg-Gitter oder einen Richtkoppler als Filterelement einer zweiten Detektoreinrichtung zugeleitet. Die beiden Detektoreinrichtungen messen gleichzeitig die optische Leistung und die Emissionswellenlänge des Lasers und erzeugen daraus simultan zwei Regelsignale für den Injektionsstrom des Lasers.

Der Erfindung liegt die Aufgabe zugrunde, eine integriert-optische Sensoreinrichtung - vorzugsweise eine lichtelektrische Positionsmeßeinrichtung - der genannten Gattung anzugeben, bei der Störungen durch unvermeidliche Fertigungstoleranzen, durch Materialeigenschaftsänderungen sowie durch Umgebungseinflüsse weitgehend vermieden werden, so daß sich eine zuverlässige Arbeitsweise ergibt.

Diese Aufgabe wird erfindungsgemäß durch die kennzeichnenden Merkmale des Anspruchs 1 gelöst.

Die mit der Erfindung erzielten Vorteile bestehen darin, daß durch das Vorsehen wenigstens eines zusätzlichen Einkoppelelements mit einem zugehörigen Wellenleiter und Detektor auf einfache Weise eine Nachregelung der optimalen Emissionswellenlänge des Halbleiterlasers erzielt wird, so daß die integriert-optische Sensoreinrichtung ungeachtet nachteiliger Einflüsse eine zuverlässige Arbeitsweise mit hoher Meßgenauigkeit erlaubt. Die besonderen Vorteile bestehen also darin, eine integriert-optische Sensoreinrichtung zu schaffen, die in gleicher Weise wie die Koppelelemente der DE-C-36 25 327 dimensionierte, auf demselben Substrat aufgebrachte und in gleichartigen Fertigungsschritten hergestellte Koppelelemente enthält, die bei Änderungen der Umgebungsbedingungen (u.a. Temperatur und Feuchte) gleichermaßen beeinflußt werden.

Vorteilhafte Ausbildungen der Erfindung entnimmt man den abhängigen Ansprüchen.

Ausführungsbeispiele der Erfindung werden anhand der Zeichnung näher erläutert.

Es zeigen
- Figur 1: eine erste integriert-optische Sensoreinrichtung;
- Figur 2: eine erste Regelschaltung;
- Figur 3: ein erstes Signaldiagramm;
- Figur 4: eine zweite integriert-optische Sensoreinrichtung;
- Figur 5: einen Querschnitt der zweiten integriert-optischen Sensoreinrichtung in einem Ausschnitt;
- Figur 6: eine zweite Regelschaltung;
- Figur 7: ein zweites Signaldiagramm.

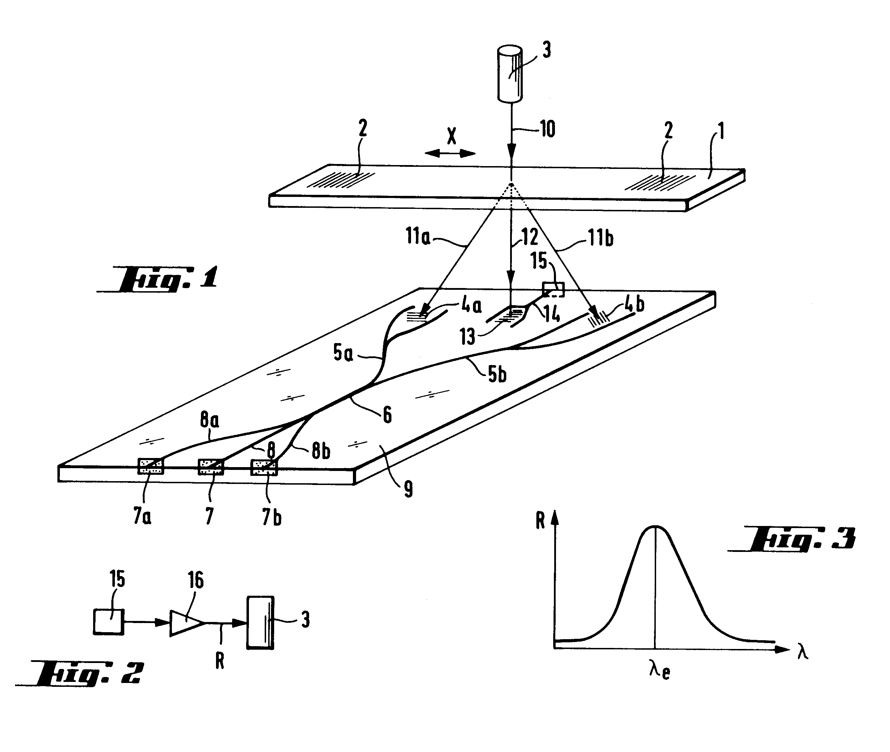

Figur 1 zeigt eine erste integriert-optische Sensoreinrichtung in Form einer lichtelektrischen Längenmeßeinrichtung zur Messung der Relativlage zweier relativ zueinander beweglicher Objekte (nicht dargestellt), beispielweise zweier Maschinenteile einer Bearbeitungsmaschine. Ein mit dem einen Objekt verbundener Teilungsträger 1 besitzt eine inkrementale Teilung 2 in Form eines Beugungsgitters, die von einer mit dem anderen Objekt verbundenen Abtasteinheit im Durchlicht abgetastet wird, die eine Lichtquelle 3 in Form eines Halbleiterlasers aufweist. Zwei Einkoppelelemente 4a, 4b in Form zweier Beugungsgitter in den beiden Eingangswellenleitern 5a, 5b eines Wellenleiterkopplers 6 sowie drei Photodetektoren 7, 7a, 7b in den drei Ausgangswellenleitern 8, 8a, 8b dieses Wellenleiterkopplers 6 sind auf einem Substrat 9 zusammengefaßt.

Ein vom Halbleiterlaser 3 ausgehendes Lichtstrahlenbündel 10 fällt senkrecht auf den Teilungsträger 1 und wird vom Beugungsgitter der Teilung 2 in ein positives Beugungsstrahlenbündel 11a und in ein negatives Beugungsstrahlenbündel 11b erster Ordnung aufgespalten. Die beiden Beugungsstrahlenbündel 11a, 11b werden mittels der beiden Einkoppelelemente 4a, 4b in die beiden Eingangswellenleiter 5a, 5b eingekoppelt und im Wellenleiterkoppler 6 zur Interferenz gebracht. Die optischen Signale in den drei Ausgangswellenleitern 8, 8a, 8b werden den zugeordneten Photodetektoren 7, 7a, 7b zugeführt. Bei der Relativbewegung der beiden Objekte und somit des Teilungsträgers 1 und der Abtasteinheit in Meßrichtung X erzeugen die drei Photodetektoren 7, 7a, 7b drei periodische Abtastsignale - beispielsweise mit einem gegenseitigen Phasenversatz von 120° -, aus denen in bekannter Weise die Meßwerte für die Relativlage der beiden Objekte gewonnen werden. Eine derartige Positionsmeßeinrichtung ist beispielsweise in der eingangs erwähnten DE-C-36 25 327 beschrieben.

Ein zusätzliches Einkoppelelement 13 in Form eines Beugungsgitters, ein zusätzlicher Wellenleiter 14 sowie ein zusätzlicher Photodetektor 15 sind auf dem Substrat 9 angeordnet. Ein aus dem Lichtstrahlenbündel 10 des Halbleiterlasers 3 vom Beugungsgitter der Teilung 2 erzeugtes zusätzliches Beugungsstrahlenbündel 12 (z.B. nullter Ordnung) wird mittels des zusätzlichen Einkoppelelements 13 je nach seiner Wellenlänge mehr oder weniger in den zusätzlichen Wellenleiter 14 zur Beaufschlagung des zusätzlichen Photodetektors 15 eingekoppelt.

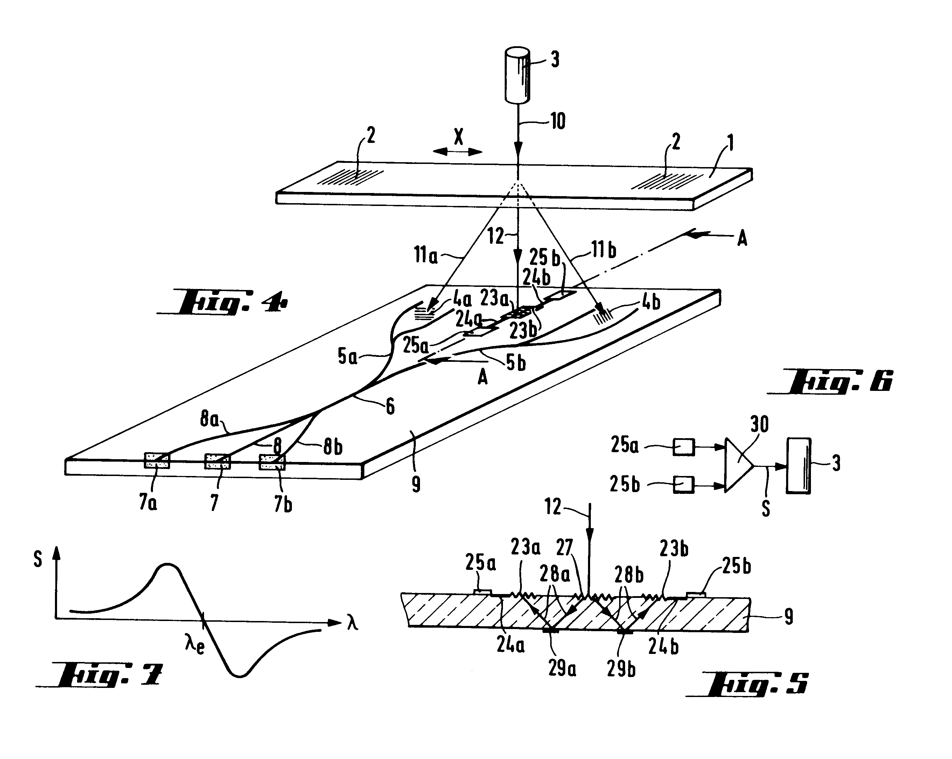

Gemäß einer ersten Regelschaltung nach Figur 2 liefert der zusätzliche Photodetektor 15 mitsamt einem nachgeschalteten Verstärker 16 ein Regelsignal R zur Regelung der Emissionswellenlänge λ des Halbleiterlasers 3, um zur Sicherstellung einer einwandfreien Funktionsweise die bei Normalbedingungen eingestellte optimale Emissionswellenlänge λₑ des Halbleiterlasers 3 bei Änderungen der Umwelteinflüsse - insbesondere der Temperatur - nachzuregeln.

In Figur 3 ist in einem ersten Signaldiagramm das Regelsignal R über die Emissionswellenlänge λ des Halbleiterlasers 3 aufgetragen; das Maximum des Regelsignals R befindet sich bei der optimalen Emissionswellenlänge λₑ des Halbleiterlasers 3.

In Figur 4 ist eine zweite integriert-optische Sensoreinrichtung in Form einer lichtelektrischen Längenmeßeinrichtung dargestellt, die mit der ersten integriert-optischen Sensoreinrichtung nach Figur 1 im wesentlichen übereinstimmt; die übereinstimmenden Elemente weisen daher die gleichen Bezugszeichen auf.

Im Unterschied zu Figur 1 sind zwei zusätzliche Einkoppelelemente 23a, 23b in Form von Beugungsgittern, zwei zusätzliche planare Wellenleiter 24a, 24b sowie zwei zusätzliche Photodetektoren 25a, 25b auf dem Substrat 9 angeordnet. Das aus dem Lichtstrahlenbündel 10 des Halbleiterlasers 3 vom Beugungsgitter der Teilung 2 erzeugte Beugungsstrahlenbündel 12 (z.B. nullter Ordnung) wird mittels der beiden zusätzlichen Einkoppelelemente 23a, 23b je nach seiner Wellenlänge mehr oder weniger in die beiden zusätzlichen Wellenleiter 24a, 24b zur Beaufschlagung der beiden zusätzlichen Photodetektoren 25a, 25b eingekoppelt.

Alternativ zeigt Figur 5 in bevorzugter Ausführung einen Querschnitt A-A der zweiten integriert-optischen Sensoreinrichtung nach Figur 4 in einem Ausschnitt, die ein zusätzliches Beugungsgitter 27 und symmetrisch zu diesem die beiden zusätzlichen Einkoppelelemente 23a, 23b in Form von Beugungsgittern, die beiden zusätzlichen Wellenleiter 24a, 24b sowie die beiden zusätzliche Photodetektoren 25a, 25b auf dem Substrat 9 aufweist.

Das aus dem Lichtstrahlenbündel 10 des Halbleiterlasers 3 vom Beugungsgitter der Teilung 2 erzeugte zusätzliche Beugungsstrahlenbündel 12 nullter Ordnung wird vom zusätzlichen Beugungsgitter 27 in zwei Teilstrahlenbündel 28a, 28b gleicher Intensität gebeugt. Diese beiden Teilstrahlenbündel 28a, 28b werden nach Reflexion an zwei Spiegeln 29a, 29b auf der Unterseite des Substrats 9 von den beiden zusätzlichen Einkoppelelementen 23a, 23b je nach ihrer Wellenlänge mehr oder weniger in die beiden zusätzlichen Wellenleiter 24a, 24b zur Beaufschlagung der beiden zusätzlichen Photodetektoren 25a, 25b eingekoppelt.

In Bezug zur optimalen Emissionswellenlänge λₑ des Halbleiterlasers 3 bei Normalbedingungen sind die Gitterkonstanten der beiden zusätzlichen Einkoppelelemente 23a, 23b etwas größer bzw. etwas kleiner gewählt, so daß die beiden zusätzlichen Einkoppelelemente 23a, 23b nun für etwas größere bzw. etwas kleinere Wellenlängen bezüglich dieser optimalen Emissionswellenlänge λₑ effizient einkoppeln. Die Differenz der durch die beiden zusätzlichen Einkoppelelemente 23a, 23b eingekoppelten Leistungen ist ein Maß für die Abweichung der Emissionswellenlänge λ des Halbleiterlasers 3 von der optimalen Emissionswellenlänge λₑ bei Änderungen der Umweltbedingungen.

Gemäß einer zweiten Regelschaltung nach Figur 6 werden die Ausgangssignale der beiden zusätzlichen Photodetektoren 25a, 25b einem Differenzverstärker 30 zur Erzeugung eines vorzeichenrichtigen Regelsignals S zur Regelung der optimalen Emissionswellenlänge λₑ des Halbleiterlasers 3 zugeführt.

In Figur 7 ist in einem zweiten Signaldiagramm das Regelsignal S über die Emissionswellenlänge λ des Halbleiterlasers 3 aufgetragen; die optimale Emissionswellenlänge λₑ befindet sich beim Nulldurchgang des Regelsignals S.

Die beiden zusätzlichen Einkoppelelemente 23a, 23b können bei nichtsenkrechtem Einfall des zusätzlichen Beugungsstrahlenbündels 12 gleiche Gitterkonstanten aufweisen.

Die Erfindung ist auch bei einer integriert-optischen Sensoreinrichtung in Form einer lichtelektrischen Winkelmeßeinrichtung mit Erfolg anwendbar.

## Patentansprüche

1. Integriert-optische Sensoreinrichtung - vorzugsweise lichtelektrische Positionsmeßeinrichtung - , bei der eine Teilung (2) eines Teilungsträgers (1) mittels Lichtstrahlenbeugung von einer Abtasteinheit abgetastet wird, die eine Laserlichtquelle (3) aufweist, und bei der wenigstens ein von der Teilung ausgehendes Beugungsstrahlenbündel (11a, 11b) mittels wenigstens eines Einkoppelelementes (4a, 4b) in wenigstens einen Wellenleiter (5a, 5b) eingekoppelt und wenigstens einem Detektor (7, 7a, 7b) zur Gewinnung von Meßwerten zugeführt wird, dadurch gekennzeichnet, daß ein von der Teilung (2) ausgehendes zusätzliches Beugungsstrahlenbündel (12) mittels wenigstens eines zusätzlichen Einkoppelelements (13; 23) in wenigstens einen zusätzlichen Wellenleiter (14; 24) zur Beaufschlagung wenigstens eines zusätzlichen Detektors (15; 25) eingekoppelt wird, der ein Regelsignal (R, S) zur Regelung der optimalen Emissionswellenlänge (λₑ) der Laserlichtquelle (3) erzeugt.

2. Sensoreinrichtung nach Anspruch 1, dadurch gekennzeichnet, daß von der Teilung (2) ausgehende Beugungsstrahlenbündel (11a, 11b) mittels Einkoppelelemente (4a, 4b) in Eingangswellenleiter (5a, 5b) eines Wellenleiterkopplers (6) eingekoppelt werden, im Wellenleiterkoppler (6) interferieren und über Ausgangswellenleiter (8, 8a, 8b) Detektoren (7, 7a, 7b) zur Gewinnung der Meßwerte zugeführt werden.

3. Sensoreinrichtung nach Anspruch 1, dadurch gekennzeichnet, daß die zusätzlichen Einkoppelelemente (23a, 23b) etwas unterschiedliche Gitterkonstanten aufweisen.

4. Sensoreinrichtung nach Anspruch 1, dadurch gekennzeichnet, daß das zusätzliche Beugungsstrahlenbündel (12) von einem zusätzlichen Beugungsgitter (27) in Teilstrahlenbündel (28a, 28b) gebeugt wird, die nach ihrer Reflexion von zusätzlichen Einkoppelelementen (23a, 23b) in zusätzliche Wellenleiter (24a, 24b) zur Beaufschlagung zusätzlicher Detektoren (25a, 25b) eingekoppelt werden.

5. Sensoreinrichtung nach den Ansprüchen 1 und 4, dadurch gekennzeichnet, daß die Ausgangssignale der zusätzlichen Detektoren (25a, 25b) einem Differenzverstärker (30) zur Erzeugung des Regelsignals (S) zugeführt werden.

6. Sensoreinrichtung nach Anspruch 4, dadurch gekennzeichnet, daß die Teilstrahlenbündel (28a, 28b) gleiche Intensitäten aufweisen.

## Claims

1. Integrated optical sensor device - preferably a photoelectric position-measuring device - in which a scale division (2) of a division carrier (1) is scanned by a scanner unit by means of light-beam diffraction, said scanner unit having a laser light source (3), and in which at least one diffracted light beam (11a, 11b) emerging from the division is coupled by means of at least one coupling element (4a, 4b) into at least one waveguide (5a, 5b), and is passed to at least one detector (7, 7a, 7b) in order to obtain measurement values, characterised in that an additional diffracted light beam (12) emerging from the division (2) is coupled by means of at least one additional coupling element (13; 23) into at least one additional waveguide (14; 24) in order to be applied to at least one additional detector (15; 25) which generates a regulating signal (R, S) in order to regulate the optimum emission wavelength (λe) of the laser light source (3).

2. Sensor device according to claim 1, characterised in that diffracted light beams (11a, 11b) emerging from the division (2) are coupled by means of coupling elements (4a, 4b) into input waveguides (5a, 5b) of a waveguide coupler (6), said light beams (11a, 11b) interfering in the waveguide coupler (6) and being passed through output waveguides (8, 8a, 8b) to detectors (7, 7a, 7b) in order to obtain the measurement values.

3. Sensor device according to claim 1, characterised in that the additional coupling elements (23a, 23b) have slightly different grid constants.

4. Sensor device according to claim 1, characterised in that the additional diffracted light beam (12) is diffracted by an additional diffraction grid (27) into partial light beams (28a, 28b) which, after their reflection by additional coupling elements (23a, 23b), are coupled into additional waveguides (24a, 24b) in order to be applied to additional detectors (25a, 25b).

5. Sensor device according to claims 1 and 4, characterised in that the output signals of the additional detectors (25a, 25b) are passed to a differential amplifier (30) in order to generate the regulating signal (S).

6. Sensor device according to claim 4, characterised in that the partial light beams (28a, 28b) have the same intensity.

## Revendications

1. Dispositif de détection optique intégré - de préférence dispositif photo-électrique de mesure de position - dans lequel une unité de lecture comportant une source de lumière laser lit une graduation (2) d'un support de graduation (1) et dans lequel au moins un faisceau de rayons diffractés (11a, 11b) sortant de la graduation est envoyé dans au moins un guide d'onde (5a, 5b) au moyen d'au moins un élément de couplage (4a, 4b) et est transmis à au moins un capteur (7, 7a, 7b) pour obtenir des valeurs de mesure, caractérisé par le fait qu'un faisceau de rayons diffractés (12) supplémentaire sortant de la graduation (2) est envoyé dans au moins un guide d'onde (14; 24) supplémentaire au moyen d'au moins un élément de couplage (13; 23) supplémentaire pour alimenter au moins un capteur (15; 25) supplémentaire qui produit un signal de réglabe (R, S) pour régler la longueur d'onde d'émission (λe) optimale de la source de lumière laser (3).

2. Dispositif de détection selon la revendication 1, caractérisé par le fait que des faisceaux de rayons diffractés (11a, 11b) sortant de la graduation (2) sont envoyés dans des guides d'onde (5a, 5b) d'entrée d'un coupleur (6) au moyen d'éléments de couplage (4a, 4b), interdirent entre eux à l'intérieur du coupleur (6) et sont transmis à des détecteurs (7, 7a, 7b) par l'intermédiaire de guides d'onde de sortie (8, 8a, 8b) pour obtenir des valeurs de mesure.

3. Dispositif de détection selon la revendication 1, caractérisé par le fait que les éléments de couplage (23a, 23b) supplémentaires présentent des constantes de réseau légèrement différentes.

4. Dispositif de détection selon la revendication 1, caractérisé par le fait que le faisceau de rayons diffractés (12) supplémentaire est diffracté par un réseau de diffraction (27) supplémentaire pour former des faisceaux partiels (28a, 28b) qui, après réflexion, sont envoyés dans des guides d'onde supplémentaires (24a, 24b) par des éléments de couplage (23a, 23b) supplémentaires en vue d'alimenter des capteurs (25a, 25b) supplémentaires.

5. Dispositif de détection selon les revendications 1 et 4, caractérisé par le fait que les signaux de sortie des capteurs supplémentaires (25a, 25b) sont envoyés à un amplificateur différenciateur (30) pour produire le signal de réglage (S).

6. Dispositif de détection selon la revendication 4, caractérisé par le fait que les faisceaux de rayons partiels (28a, 28b) ont même intensité.
